# EUROPÄISCHE PATENTSCHRIFT

(11) **EP 2 584 235 B1**
(45) Veröffentlichungstag und Bekanntmachung des Hinweises auf die Patenterteilung: **19.03.2014**
(21) Anmeldenummer: 11185391.7
(22) Anmeldetag: 17.10.2011
(51) Int. Cl.: F16K 31/528, F02B 37/18

(54) **Aktuator**
Actuator
Actionneur

(43) Veröffentlichungstag der Anmeldung: 24.04.2013
(73) Patentinhaber: Cooper-Standard Automotive (Deutschland) GmbH, 89601 Schelklingen (DE)
(72) Erfinder: Thiery, Christoph, 68239 Mannheim (DE); Schieker, Manuel, 68163 Mannheim (DE); Klipfel, Bernhard, 76187 Karlsruhe (DE)
(74) Vertreter: HOFFMANN EITLE

(56) Entgegenhaltungen:
- EP-A1- 2 172 682
- DE-A1- 2 211 955
- DE-A1- 3 146 860
- DE-C- 46 204
- US-A- 373 072
- US-A- 4 256 019
- US-A- 4 840 350
- US-B1- 6 352 019

## Beschreibung

### Technisches Gebiet

Die Erfindung betrifft einen Aktuator für einen Hebel, der beispielsweise mit einem Ventil oder einem Wastegate oder einer variablen Turbinengeometrie eines Abgasturboladers verbunden sein kann.

Insbesondere bei den beispielhaft genannten Anwendungsfällen müssen Ventile oder sonstige Komponenten, typischerweise unter Zuhilfenahme eines Hebels, der an einer Ventil- oder entsprechenden Achse angebracht ist, verschwenkt werden.

### Stand der Technik

Insbesondere im Hinblick auf die Anwendung bei einem Wastegate oder einer variablen Turbinengeometrie eines Abgasturboladers sei zu weiteren Details auf die von der Anmelderin eingereichte europäische Patentanmeldung 10 172 629 verwiesen, deren Offenbarung im Hinblick auf Details des Wastegates, der variablen Turbinengeometrie und des Aktuators zum Gegenstand der vorliegenden Anmeldung gemacht wird.

Aus der DE 10 2008 004 688 A1 geht ergänzend ein Stellantrieb zur Betätigung eines Ventils in einem Turbolader hervor, bei dem der Hebel eines Antriebs mit dem mit dem Ventil verbundenen Hebel durch eine Verbindungsstange mit zumindest einem Kugelgelenk verbunden ist.

Die JP 2005315179 betrifft ein Ventil für einen Abgasturbolader, das durch eine Pneumatikdose betätigt wird, deren Ausgangsstange in einem Reibungselement translatorisch geführt ist. Diese Führung ist jedoch angesichts der Tatsache, dass die genannte Ausgangsstange, die mit einem Hebel an dem Ventil verbunden ist, beim Schwenken des Ventils eine zumindest geringfügige Schwenkbewegung ausführt, verbesserungswürdig.

Die US 4,256,019 bildet Stand der Technik, der unter den Oberbegriff von Anspruch 1 fällt. Die US 373,072, US 6,352,109 B1, DE 2 211 955, DE 46 204 und US 4,840,350 bilden weiteren Stand der Technik.

### Darstellung der Erfindung

Der Erfindung liegt demnach die Aufgabe zugrunde, einen Aktuator für einen Hebel zu schaffen, welcher der notwendigen Kinematik Rechnung trägt und im Hinblick auf die Genauigkeit und/oder auftretenden Kräfte verbessert ist.

Die Lösung dieser Aufgabe erfolgt durch den im Anspruch 1 beschriebenen Aktuator.

Demzufolge weist dieser eine Verbindungsstange zwischen einem Antrieb und einem Hebel auf, die an einer von dem Hebel entfernten Stelle drehbar gelagert und zwischen dieser Lagerung und dem Hebel auf einem Kreisbogen geführt ist. Der Hebel ist, wie eingangs erwähnt, beispielsweise mit einem Ventil oder einem Wastegate oder einer variablen Turbinengeometrie eines Abgasturboladers verbunden. Bei dem Hebel kann es sich um ein beliebiges, jedoch beispielsweise laschenförmiges Bauteil handeln, das mittelbar oder unmittelbar mit der Drehachse des genannten Bauteils derart verbunden ist, dass eine Drehung des Hebels eine Drehung des Bauteils bewirkt. Ein von der Drehachse entfernter Punkt auf dem Hebel, an dem beispielsweise die Verbindungsstange angebracht ist, beschreibt bei der Drehung des Hebels einen Kreisbogen. Dementsprechend unterliegt auch die Verbindungsstange dieser Bewegung, die erfindungsgemäß durch die drehbare Lagerung der Verbindungsstange an einer von dem Hebel entfernten Stelle der Verbindungsstange ermöglicht wird.

Um diese Schwenkbewegung in definierter Weise und gleichzeitig mit möglichst geringer Reibung und geringen Seitenkräfte ablaufen zu lassen, ist die Verbindungsstange zwischen der Lagerung und ihrer Anbringung an dem Hebel auf einem Kreisbogen geführt. Somit wird im Hinblick auf die Verbindungsstange, ohne dass wesentliche Seitenkräfte und/oder Reibung auftreten, für eine definierte Bewegung gesorgt, und dadurch die Genauigkeit bei der Betätigung eines Ventils oder ähnlichem mittels eines Hebels gewährleistet. Bei dem oben genannten Ventil kann es sich um ein Abgasrückführventil oder ein beliebiges Ventil, beispielsweise im Bereich eines Kraftfahrzeugs, handeln.

Bevorzugte Weiterbildungen sind in den weiteren Ansprüchen beschrieben.

Derzeit wird bevorzugt, die Verbindungsstange in einem Führungselement derart aufzunehmen, dass die Verbindungsstange in dem Führungselement in Längsrichtung der Stange beweglich ist, um eine translatorische Bewegung von einem Antrieb auf den Hebel zu übertragen. Das Führungselement weist geeignete, beispielsweise kreisbogenförmige Strukturen daran auf, die mit komplementären Strukturen in einem (ortsfesten) Führungsblock zusammenwirken, in dem das Führungselement aufgenommen ist.

Besonders bevorzugt wird derzeit die Ausbildung des Führungselements mit einer Hülse, in der die Verbindungsstange aufgenommen ist.

Zur drehbaren Lagerung der Verbindungsstange kann eine Rolle vorgesehen sein, mittels welcher die drehbare Lagerung der Verbindungsstange erfolgt. Die Rolle kann beispielsweise in geeigneter Weise an einem Ende der Verbindungsstange vorgesehen sein und mit einer Kontur an einem Ausgangselement des Antriebs zusammenwirken.

Der Antrieb ist drehend. Als translatorische Antriebe sind Pneumatikdosen oder Solenoids denkbar. Im Gegensatz zu der beispielsweise im Stand der Technik vorgesehenen Führung der Ausgangsstange des Aktuators, die als Verbindungsstange zu dem Hebel wirkt, in einem Reibungselement können durch die erfindungsgemäße Maßnahme übermäßige Reibung und Seitenkräfte vermieden werden. Bei einem drehenden Antrieb kann es sich beispielsweise um einen geeigneten Elektromotor, gegebenenfalls mit einem nachgeschalteten Getriebe handeln.

Das Ausgangselement eines drehenden Antriebs, an dem die Verbindungsstange drehbar gelagert sein kann, weist ein Schneckenrad oder ein Gewindeelement auf. Im Hinblick auf Details eines Gewindeelements sei auf die EP 2 172 682 A1 der Anmelderin sowie die darin genannten Dokumente verwiesen, deren Offenbarung im Hinblick auf das Gewindeelement zum Gegenstand der vorliegenden Anmeldung gemacht wird. Insbesondere kann die Drehachse des Gewindeelements schräg zu, mathematisch ausgedrückt windschief, zu der Verbindungsstange sein. Bei einem Schneckenrad wird hingegen bevorzugt, dass die Drehachse des Schneckenrads senkrecht zur Längserstreckung der Verbindungsstange ist.

Für die Genauigkeit bei der Übertragung der Bewegung auf die Verbindungsstange hat es sich ferner als günstig erwiesen, deren Drehlagerung in einer ortsfesten Linearführung zu führen. Wie erwähnt, bewegt sich die Verbindungsstange typischerweise im Wesentlichen in ihrer Längsrichtung und verschwenkt dabei zumindest geringfügig. Um bei dieser Bewegung eine (ungewünschte) Schwenk- oder Querbewegung im Bereich der Drehlagerung der Verbindungsstange zu vermeiden, wird bevorzugt die beschriebene Führung vorgesehen.

### Kurze Beschreibung der Zeichnungen

Nachfolgend wird ein Ausführungsbeispiel der Erfindung unter Bezugnahme auf die Zeichnungen näher erläutert. Es zeigen:
- Fig. 1: Teile des erfindungsgemäßen Aktuators in einer teilweise geschnittenen Draufsicht; und
- Fig. 2: die in Fig. 1 gezeigten Teile in einer geschnittenen Seitenansicht.

### Ausführliche Beschreibung einer bevorzugten Ausführungsform der Erfindung

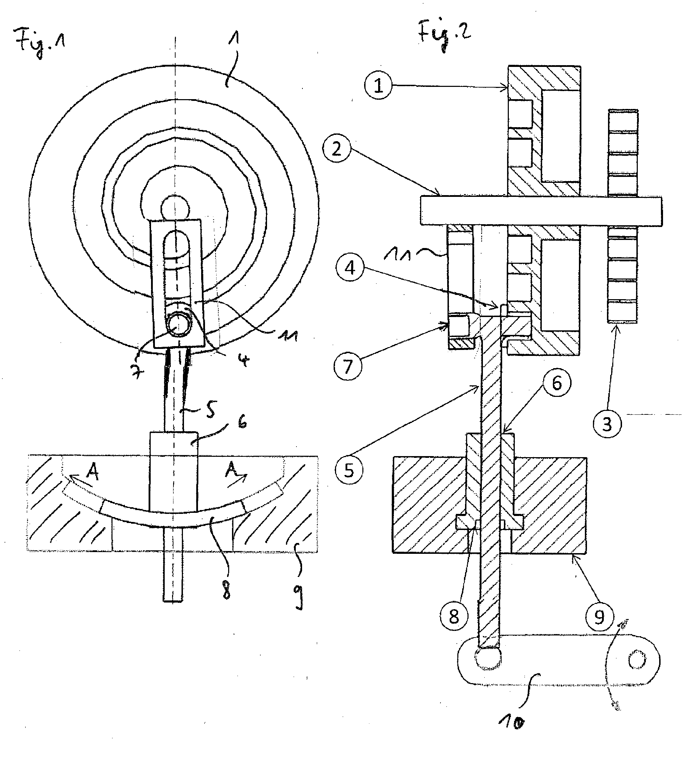

In Fig. 1 ist als Ausgangselement eines Antriebs ein Schneckenrad 1 mit einer entsprechenden schneckenförmigen Kontur zu erkennen. In dieser Kontur ist, wie besser aus Fig. 2 hervorgeht, eine Rolle 4 aufgenommen, die drehbar an einer Achse 7 am oberen Ende einer Verbindungsstange 5 angebracht ist. Wie sich aus Fig. 1 ergibt, bewirkt eine Drehung des Schneckenrads 1 in Richtung des Uhrzeigersinns ein Anheben der Verbindungsstange 5, da sich die schneckenförmige Nut dem Mittelpunkt des Schneckenrads annähert. Insoweit kann bei einer Drehung des Schneckenrads in der genannten Richtung die Verbindungsstange 5 (gemäß der Darstellung von Fig. 1) angehoben werden, und ein am unteren Ende der Verbindungsstange angebrachter Hebel 10 (vgl. Fig. 2) kann, sofern er sich in einer beliebigen Ausrichtung schräg zu der Verbindungsstange 5 erstreckt, verdreht werden, um beispielsweise ein Ventilelement zu verdrehen.

Je kleiner der Winkel zwischen dem Hebel 10 und der Verbindungsstange in der in Fig. 1 gezeigten Situation ist, umso mehr bewegt sich der Verbindungspunkt zwischen Hebel 10 und Verbindungsstange in einer Richtung quer zu der Verbindungsstange. Selbst wenn der Hebel 10 in der in Fig. 1 gezeigten Situation senkrecht zu der Verbindungsstange ausgerichtet ist, beschreibt der genannte Verbindungspunkt bei Bewegung der Verbindungsstange nach oben eine Kreisbahn und bewegt sich damit (auch) in seitlicher Richtung. Dieser Bewegung folgt die Verbindungsstange, die an dem Verbindungspunkt drehbar an dem Hebel 10 angebracht ist, zwangsläufig und bewegt sich somit zumindest geringfügig in Richtung der Pfeile A. Diese Bewegung auf einer Kreisbahn wird erfindungsgemäß ausgeführt, indem bei dem gezeigten Ausführungsbeispiel die Verbindungsstange 5 in einem Führungselement 8 mit einer Hülse 6 aufgenommen ist.

Um die oben beschriebene Auf-Ab-Bewegung der Verbindungsstange 5 zu ermöglichen, ist diese in ihrer Längsrichtung in der Hülse 6 verschiebbar. In dem gezeigten Fall sind jedoch am unteren Ende der Hülse an dem Führungselement 8 kreisbogenförmige Fortsätze ausgebildet, die in komplementären Konturen, beispielsweise Nuten oder Schlitze, in einem Führungsblock 9 aufgenommen sind. Hierdurch erfolgt auch bei der kombinierten translatorischen und Schwenk-Bewegung der Verbindungsstange 5 ein definierter Bewegungsablauf, ohne dass hierbei übermäßige Reibungs- oder Seitenkräfte auftreten. Die Schwenkbewegung der Verbindungsstange 5 erfolgt insbesondere um die in der Schneckenkontur aufgenommene Rolle 4.

Bei der gezeigten Ausführungsform ist (vgl. Fig. 2) die Führungsstange 5 an ihrem oberen Ende im Wesentlichen T-förmig ausgebildet. An dem zu dem Schneckenrad gerichteten Arm des "T" ist bei der gezeigten Ausführungsform die Rolle 4 drehbar gelagert, und an dem zu dem Betrachter von Fig. 1 gerichteten Arm ist dieser Bereich der Verbindungsstange 5 in einer Linearführung 11, die ortsfest ist, aufgenommen. Wenn sich die Verbindungsstange somit durch die Drehbewegung des Schneckenrades 1 ausgehend von der in Fig. 1 gezeigten Situation nach oben bewegt, wird sie in diesem Bereich in ihrer Längsrichtung geführt und kann nicht ausweichen. Hierdurch wird die Genauigkeit der Bewegung verbessert.

Die Bereiche (gemäß Fig. 1) seitlich von der Hülse 6, also im Bereich der Pfeile und des Referenzzeichens A können gemäß der "Dicke" (gemäß Fig. 1 senkrecht zur Zeichenebene) ausgespart sein. Dies gilt in gleicher Weise für die Bereiche in der Umgebung des Abschnitts der Verbindungsstange 5 unterhalb des Führungselements 8, wie in Fig. 1 erkennbar ist. Aus Fig. 2 ergibt sich, dass in diesem Bereich der Führungsblock 9 zusätzlich in "Dickenrichtung", d.h. gemäß Fig. 2 seitlich, ausgespart ist.

In der Seitenansicht von Fig. 2 ist zusätzlich die Drehachse 2 des Schneckenelements 1 zu erkennen, die in geeigneter Weise mit einem Zahnrad 3 verbunden sein kann, das von einem Drehrad angetrieben wird. Aus Fig. 2 ergibt sich ferner die einstückige Ausgestaltung des Führungselements 8 mit der Hülse 6 und den in dem gezeigten Fall am unteren Ende vorgesehenen kreisbogenförmigen Fortsätzen.

## Patentansprüche

1. Aktuator für einen Hebel (10), der beispielsweise mit einem Ventil oder einem Wastegate oder einer variablen Turbinengeometrie eines Abgasturboladers verbunden ist, mit einem Antrieb, mit einer Verbindungsstange (5) zwischen dem Antrieb und dem Hebel (10), die an einer von dem Hebel (10) entfernten Stelle drehbar gelagert und zwischen der Lagerung und dem Hebel (10) auf einem Kreisbogen geführt ist, dadurch **geke nnzeichnet**, dass
der Antrieb drehend ausgeführt ist, und der Antrieb ein Schneckenrad (1) oder ein Gewindeelement aufweist.

2. Aktuator nach Anspruch 1,
**dadurch gekennzeichnet, dass**
die Verbindungsstange (5) in einem Führungselement (8) aufgenommen ist, das in einem Führungsblock (9) aufgenommen ist.

3. Aktuator nach Anspruch 2,
**dadurch gekennzeichnet, dass**
das Führungselement (8) eine Hülse (6) aufweist.

4. Aktuator nach einem der vorangehenden Ansprüche,
**dadurch gekennzeichnet, dass**
die Verbindungsstange (5) mittels einer Rolle (4) gelagert ist.

5. Aktuator nach einem der vorangehenden Ansprüche,
**dadurch gekennzeichnet, dass**
die Drehlagerung der Verbindungsstange in einer ortsfesten Linearführung (11) geführt ist.

## Claims

1. Actuator for a lever (10) which is connected for example to a valve or waste gate or variable turbine geometry of an exhaust turbocharger, having a drive, with a connecting rod (5) between the drive and the lever (10) which is mounted rotatably at a location remote from the lever (10) and guided on an arc between the mounting and the lever (10), **characterised in that**
the drive is designed to rotate, and the drive has a worm wheel (1) or a threaded element.

2. Actuator according to claim 1,
**characterised in that**
the connecting rod (5) is received in a guide element (8) which is received in a guide block (9).

3. Actuator according to claim 2,
**characterised in that**
the guide element (8) has a bush (6).

4. Actuator according to any of the preceding claims,
**characterised in that**
the connecting rod (5) is mounted by means of a roller (4).

5. Actuator according to any of the preceding claims,
**characterised in that**
the rotational mounting of the connecting rod is guided in a stationary linear guide (11).

## Revendications

1. Actionneur pour un levier (10), lequel est par exemple relié à une soupape ou une soupape de décharge ou une géométrie de turbine variable d'un turbocompresseur à gaz d'échappement, avec un entraînement, avec une bielle de connexion (5) entre l'entraînement et le levier (10), laquelle est montée de manière rotative sur un palier à un emplacement distant du levier (10) et est guidée sur un arc de cercle entre le palier et le levier (10), **caractérisé en ce que**
l'entraînement est rotatif, et **en ce que** l'entraînement comprend une roue à vis sans fin (1) ou un élément fileté.

2. Actionneur selon la revendication 1, **caractérisé en ce que**
la bielle de connexion (5) est logée dans un élément de guidage (8) lui-même logé dans un bloc de guidage (9).

3. Actionneur selon la revendication 2, **caractérisé en ce que**
l'élément de guidage (8) comprend un manchon (6).

4. Actionneur selon l'une des revendications précédentes, **caractérisé en ce que**
la bielle de connexion (5) est montée sur palier au moyen d'un galet (4).

5. Actionneur selon l'une des revendications précédentes, **caractérisé en ce que**
le palier rotatif de la bielle de connexion est guidé dans un guidage linéaire (11) fixe.
